# EUROPÄISCHE PATENTSCHRIFT

(11) **EP 1 161 631 B1**
(45) Veröffentlichungstag und Bekanntmachung des Hinweises auf die Patenterteilung: **17.01.2007**
(21) Anmeldenummer: 00912563.4
(22) Anmeldetag: 08.03.2000
(51) Int. Cl.: F16C 23/04, B04B 9/12, B04B 5/00

(54) **WELLENLAGERUNG MIT LAGERKALOTTE**
SHAFT BEARING WITH SPHERICAL CAP FOR THE SHAFT
PALIER D'ARBRE AVEC CALOTTE DE PALIER

(30) Priorität: 12.03.1999 DE 19911212
(43) Veröffentlichungstag der Anmeldung: 12.12.2001
(73) Patentinhaber: Mann + Hummel GmbH, 71638 Ludwigsburg (DE)
(72) Erfinder: FISCHER, Helmut, D-71686 Remseck (DE); FREHLAND, Peter, D-71254 Ditzingen (DE)
(74) Vertreter: Voth, Gerhard
(86) Internationale Anmeldenummer: PCT/EP2000/001990
(87) Internationale Veröffentlichungsnummer: WO 2000/055515

(56) Entgegenhaltungen:
- WO-A-98/46361
- DE-A- 2 930 994
- DE-A- 19 636 872
- US-A- 1 627 868
- US-A- 1 634 199
- US-A- 1 649 889
- US-A- 5 718 517

## Beschreibung

### Stand der Technik

Die Erfindung betrifft eine Wellenlagerung, welche eine Lagerkalotte enthält nach der Gattung des Patentanspruches 1.

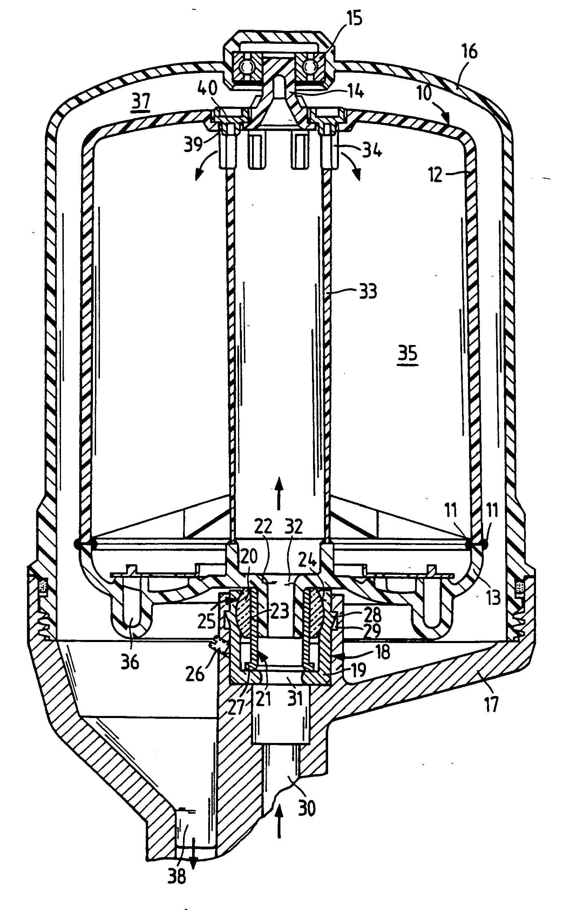

Wellenlagerungen, bei denen Lagerkalotten zur Anwendung kommen, sind bekannt. Z. B. offenbart die DE 195 24 953 A1 einen Elektromotor (siehe Figur 1) bei dem die Welle 4 zur Lagerung des Läufers 5 in einer Lagerkalotte 8 im Gehäuse 7 gelagert ist. Die Lagerkalotten ermöglichen einen Ausgleich von Toleranzen, die unter anderem auch zu einem Winkelversatz der gelagerten Welle führen können. Die Lagerkalotte weist einen zylindrischen Innenbereich auf, in denen die Welle geführt wird und einen Außenbereich, der das Segment einer Kugeloberfläche bildet. Diese kann in einer zugehörigen Aufnahme im Gehäuse mit zwei rotatorischen Freiheits-graden, die nicht dem Freiheitsgrad der sich drehenden Welle entsprechen, gedreht werden. Dadurch lassen sich die auftretenden Lagerkräfte auch bei größeren Toleranzen minimieren.

Die Lagerkalotten werden direkt ins Gehäuse eingesetzt, wobei in der Lösung gemäß der DE 195 24 935 A1 elastische Rastnasen 32 dies ermöglichen. Die Welle 4 wird direkt in der Lagerkalotte geführt. Bei einer solchen Lösung müssen jedoch bestimmte Vorgaben bezüglich der verwendeten Werkstoffe für Welle und Gehäuse beachtet werden. Sind die Nasen 32 Teil der Gehäuseschalen, so muss das Gehäuse aus einem elastischen Material, insbesondere Kunststoff, gefertigt sein. Wird als Werkstoff ein steiferes Material wie z. B. Metall gewählt, so muss die Aufnahme mehrteilig sein, um die Lagerkalotte 8 aufnehmen zu können. Man könnte z. B. einen Zusatzring mit einer Schraubverbindung zur Bildung der Aufnahme für die Lagerkalotte vorsehen. Diese würde jedoch den Bauteilaufwand erhöhen und somit die WirtSchaftlichkeit der Lösung verringern. Weiterhin erfordert die direkte Lagerung der Welle 4 in der Lagerkalotte 8, dass hier eine günstige Werkstoffwahl bezüglich der auftretenden Gleitreibung gewählt wird. Hierdurch ist die Wahl der Werkstoffpaarungen eingeschränkt. Insbesondere bei Wellen aus Kunststoff wird die Lebensdauer der Baugruppe durch einen vergleichsweise hohen Verschleiß der sich drehenden Kunststoffwelle in der Lagerkalotte begrenzt.

Aus der WO 98/46361 ist ein Rotor insbesondere zum Einbau in das Gehäuse einer Freistrahlzentrifuge bekannt wobei diese mit wenigstens einem Einlaß und wenigstens einem Auslaß ausgestattet ist. Der Lagerzapfen des Kunststoffrotors ist mit einer Lagerbuchse aus Stahl in einer Einpressbuchse aus Bronze gelagert. Das Gehäuseunterteil, das das aus Lagerbuchse und Einpressbuchse bestehende Gleitlager aufnimmt, besteht aus Aluminium. Die Gleitbuchse weist einen Absatz auf, der im Falle eines Wechsels des Rotors ein Herausrutschen aus der Einpressbuchse verhindert. Der Absatz der Lagerbuchse aus Stahl liegt direkt dem Gehäuse aus Aluminum gegenüber.

Weiter ist aus der DE 196 368 72 A eine gattungsgemäße Wellenlagerung bekannt, die eine vormontierte Lagereinheit enthält.

Eine solche Wellenlagerung bildet eine Lagereinheit, die aus der Lagerkalotte selbst und einem Käfig besteht. Die Lagerkalotte ist in einer dafür vorgesehene Aufnahme im Käfig eingebracht. Die Aufnahme bildet die kugelförmige Innenfläche, die mit der entsprechenden Außenfläche der Kalotte in Verbindung steht. Der Käfig ist als Kunststoffspritzteil ausgebildet. Die Lagerkalotte lässt sich dann einfach in dieses Bauteil eindrücken ohne das zusätzliche Befestigungsmittel notwendig sind. Eine solche Wellenlagerung kann dann am Einbauort, z. B. in einem Gehäuse einfach montiert und fixiert werden. Im Inneren der Lagerkalotte dreht sich dann ein Rotationskörper, z. B. die zu lagernde Welle.

Zur Bildung günstiger Werkstoffpaarungen ist erfindungsgemäß der Rotationskörper als Hülse vorgesehen, die mit der Innenfläche der Kalotte in Verbindung steht. In diese Hülse wird das zu lagernde Bauteil eingesteckt. Hierdurch wird eine direkte Verbindung zwischen zu lagerndem Bauteil und Lagerkalotte vermieden, was eine größere Flexibilität in der Wahl des Werkstoffes des zu lagernden Bauteils ermöglicht. Die Relativbewegung bei Drehung des zu lagernden Bauteils findet zwischen Hülse und Kalottenlager statt, wobei das zu lagernde Bauteil in die Hülse eingepresst, geklebt wird oder anderweitig befestigt ist. Dabei wird entsprechend der Relativbewegung Hülse und Kalotte bestimmt, welche Verbindung die günstigeren Gleiteigenschaften aufweist. Bei der Wahl eines zu lagernden Teils aus Kunststoff ist es z. B. sinnvoll, dieses in die Hülse einzupressen, so dass sich letztere in der Lagerkalotte dreht. Für Lagerkalotte und Hülse lässt sich dann eine verschleißarme Metall-Metall-Werkstoffpaarung wählen.

Die drehbar in der Lagerkalotte gelagerte Hülse ist entsprechend der Erfindung mit einer Verliersicherung versehen. Diese besteht aus einem Absatz, welcher ein Herausrutschen der Hülse aus der Lagerkalotte verhindert. Hierdurch werden die Fehlermöglichkeiten beim Einbau oder Auswechseln des zu lagernden Bauteils verringert. Durch Wahl einer entsprechenden Hülsenlänge und Vorsehen eines Freiraums im Lager-käfig kann trotz Verliersicherung ein Axialspiel der Hülse vorgesehen werden. Die verleiht der Wellenlagerung einen weiteren axialen Freiheitsgrad, der die Verwendung der Wellenlagerung als Loslager erlaubt.

Eine vorteilhafte Weiterbildung, sieht vor, dass als Werkstoffpaarung für die Lagerkalotte und die Hülse zwei Sintermaterialien zum Einsatz kommen. Die Herstellung dieser Bauteile aus Sintermaterialien haben eine Kosteneinsparung durch Verringerung der Fertigungszeit zur Folge. Außerdem verringert sich der Materialaufwand, da diese Teile nicht spanend nachbearbeitet werden müssen. Dabei können über den Sinterprozess sehr gute Oberflächeneigenschaften für Lagerkalotte und Hülse erreicht werden. Hierdurch lässt sich der Reibungswiderstand bei gleichzeitig wirtschaftlicher Fertigung der Gleitpartner verbessern. Ein Werkstoffbeispiel für eine Gleitlagerpaarung mit je zwei Sintermaterialien ist z. B. durch die Verwendung von Sinterstahl D11 und Sinterbronze B50 gegeben.

Zur Fixierung der Wellenlagerung kann gemäß einer günstigen Ausführungsform der Erfindung eine Arretierung zwischen Käfig und Einbauort vorgesehen werden. Diese Arretierung ermöglicht eine Fixierung der Wellenlagerung, ohne dass diese im Ein bauort unter Spannung gesetzt wird. Dies kann durch eine formschlüssige Verbindung erreicht werden. Möglich ist das Vorsehen von Rastnasen am Käfig. Insbesondere wenn dieser aus Kunststoff besteht, können diese Rastnasen beim Einschieben in den Einbauort elastisch deformiert werden, wobei eine kraftfreie Fixierung des Käfigs durch Einschnappen der Rastnasen in entsprechenden Fenstern des Einbauorts zustande kommt. Eine weitere Möglichkeit besteht in dem Vorsehen einer Madenschraube, die ein Gewinde im Einbauort aufweist und durch Einschrauben zu einer Fixierung des Käfigs führt. Hierzu kann im Käfig ein entsprechender Vorsprung vorgesehen werden. Gegenüber einem Einpressen der Wellenlagerung am Einbauort hat das Vorsehen einer kraftfreien Arretierung den Vorteil, dass keine Verformung zu einer Schwergängigkeit der Lagerkalotte im Käfig führen kann. Dadurch ist die Funktion der Lagerkalotte, einen Winkelversatz des Rotationskörpers auszugleichen, uneingeschränkt gegeben.

Die erfindungsgemäße Wellenlagerung eignet sich zum Einbau in eine Zentrifuge, wobei das zu lagernde Bauteil der Zentrifugenrotor ist. Dieser kann zumindest einseitig mit der Wellenlagerung ausgestattet werden, was vor allen Dingen bei der Fertigung des Zentrifugenrotors aus Kunststoff die genannten Vorteile mit sich bringt.

Da Zentrifugenrotoren mit hoher Drehzahl betrieben werden, ist einer kraftfreie Lagerung in diesem Anwendungsfall besonders vorteilhaft. Bei Auftreten von Winkeltoleranzen bezüglich der Drehachse des Rotors wird dessen Funktionalität nicht eingeschränkt. Durch diese Maßnahme lässt sich auch die auf den Rotor wirkende Bauteilbeanspruchung vermindern. Dadurch kann nicht zuletzt die Bildung von Unwuchten im Zentrifugenrotor während dessen Lebensdauer minimiert werden.

Eine besondere Ausführungsform der Zentrifuge sieht vor, den in der Wellenlagerung zu lagernden Achsstutzen als Hohlstutzen auszuführen. Gleichzeitig wird im Käfig der Wellenlagerung eine Zuführöffnung vorgesehen. Dadurch ergibt sich ein Zuleitungskanal für das zu zentrifugierende Fluid. Dieses durchtritt den Käfig durch die Zuführöffnung und wird durch den Hohlstutzen in den Innenraum des Zentrifugenrotors eingeleitet. Wird die Zentrifuge als Ölzentrifuge betrieben, bewirkt diese Bauform gleichzeitig eine zuverlässige Schmierung des Kalottenlagers, wodurch dessen Verschleiß minimiert werden kann. Sofern zwischen Lagerkalotte und Käfig ein Spiel vorgesehen ist, wird hier auf Grund des anliegenden Öldrucks ein Verschluss erzeugt, da der Öldruck die Kalotte ähnlich einer Ventilkugel in deren Aufnahme presst.

Für den beschriebenen Fall der Zentrifuge ist es also notwendig, dass die einzelnen Bauteile der Wellenlagerung bestehend aus Käfig, Lagerkalotte und Hülse gegeneinander abgedichtet werden können. Dies wird durch entsprechende Flächenpaarungen erreicht. Außerdem muss der Käfig gegenüber dem Einbauort und die Hülse gegenüber dem Rotationskörper abgedichtet sein. Dabei kann ein geringer Leckagestrom abhängig vom Anwendungsfall hingenommen werden. Die Verwendung einer abgedichteten Wellenlagerung der beschriebenen Form ist überall dort denkbar, wo die Wellenlagerung im Grenzbereich zwischen einem flüssigkeitsführenden und einem von dieser Flüssigkeit abgedichteten Raum eingesetzt wird. Dies ist insbesondere der Fall, wenn die Wellenlagerung gleichzeitig zur Durchleitung eines Fluides z. B. durch das zu lagernde Bauteil verwendet wird.

Diese und weitere Merkmale von bevorzugten Weiterbildungen der Erfindung gehen außer aus den Ansprüchen auch aus der Beschreibung und den Zeichnungen hervor.

### Zeichnung

Ein Ausführungsbeispiel der Erfindung wird nachfolgend anhand der Zeichnung erläutert. Die Figur zeigt eine Zentrifuge in Kunststoffbauweise, an deren Unterteil die erfindungsgemäße Wellenlagerung zum Einsatz kommt.

### Beschreibung der Ausführungsbeispiele

Die Zentrifuge gemäß der Zeichnung besteht aus einem Zentrifugenrotor 10 der aus zwei über eine Rotationsschweißverbindung 11 verbundenen Halbschalen 12, 13 besteht. Die Halbschale 12 weist einen Wellenansatz 14 zur Lagerung in einem Kugellager 15 auf, wobei das Kugellager in einer Gehäuseglocke 16 aus Kunststoff befestigt ist. Die Gehäuseglocke ist in einem Gehäuseträger 17 aus Aluminium befestigt, der eine Einbauöffnung 18 zur Aufnahme eines Käfigs 19 aufweist. Der Käfig bildet zusammen mit einer Lagerkalotte 20 und einer Hülse 21 eine Wellenlagerung, in die ein hohler Achsstummel 22 eingesteckt werden kann. Der Achsstummel ist Teil der Halbschale 13 und bildet so die zweite Lagerstelle des Zentrifugenrotors 10.

Der Achsstummel 22 ist in die Hülse 21 eingepresst. Die Hülse 21 ist gleitend in einer Innenseite 23 der Lagerkalotte 20 gelagert. Deswegen kann sich der Zentrifugenrotor 10 ohne großen Drehwiderstand bewegen. Eine Außenseite 24 der Lagerkalotte ist in einer Aufnahme 25 des Käfigs 19 gelagert. Diese Aufnahme weist die Innenoberfläche eines Kugelsegmentes auf, so dass sich die Lagerkalotte darin bewegen kann. Der Käfig 19 wird in der Einbauöffnung 18 durch eine Maden-schraube 26 arretiert. An der Hülse 21 ist eine Verliersicherung 27 in Form eines Absatzes vorgesehen, der ein Herausrutschen der Hülse aus der Lagerkalotte 20 verhindert. Alternativ zur Madenschraube können auch Rastnasen 28 am Käfig 19 vorgesehen sein, die im Zusammenwirken mit einer Ringnut 29 in der Einbauöffnung 18 eine Arretierung bewirken.

Im Gehäuseträger 17 ist ein Einlass 30 für das zu zentrifugierende Fluid vorgesehen. Dieser korrespondiert mit einer Zuführöffnung 31 im Käfig 19, so dass das zu zentrifugierende Fluid in das Käfiginnere dringen kann. Von dort aus kann es durch den hohlen Achsstummel, der einen Zufluss 32 bildet, in ein Mittelrohr 33 der Zentrifuge treten. Über Öffnungen 34 gelangt das Fluid dann in den Abscheideraum 35 und von dort über Antriebsdüsen 36 für die Zentrifuge in einen Gehäuseraum 37, von wo aus es über einen Auslaß 38 im Gehäuseträger 17 abfließen kann.

Die Öffnungen 34 werden durch Nasen in dem nicht dargestellten Gusswerkzeug für die Halbschale 12 gebildet. Ein zum Ausheben der Nasen notwendiger Ringspalt 39 wird durch einen Ringverschluss 40 verschlossen, der z. B. mit der Halbschale 12 verschweißt werden kann. Weitere gestalterische Details der dargestellten Zentrifuge lassen sich der WO98/46361 entnehmen.

## Patentansprüche

1. Wellenlagerung, welche eine Lagerkalotte (20) enthält, wobei
- eine Außenseite (24) der Lagerkalotte (20) mit zwei rotatorischen Freiheitsgraden in einer Aufnahme (25) gelagert ist, wobei die Aufnahme (25) Teil eines Käfigs (19) ist, welcher mit der Lagerkalotte (20) eine vormontierte Einheit bildet, die am Einbauort (18) der Wellenlagerung montierbar ist,
- ein Rotationskörper in einer Innenseite (23) der Lagerkalotte (20) zumindest drehbar gelagert ist,
**dadurch gekennzeichnet, dass**
- der Rotationskörper eine Hülse (21) ist, in die das zu lagernde Bauteil eingesteckt werden kann, wobei die Hülse (21) eine Verliersicherung (27) aufweist, die das Axialspiel der Hülse begrenzt und ein Herausrutschen der Hülse aus der Lagerkalotte verhindert, wobei die Verbindungsflächen zwischen Einbauort (18), Käfig (19), Lagerkalotte (20), Hülse (21) und dem zu lagernden Bauteil (22) derart ausgeführt sind, dass eine Abdichtung zustande kommt, wobei die Verliersicherung (27) einem nach innen gerichteten Flansch am Käfig (19) gegenüberliegt.

2. Wellenlagerung nach Anspruch 1, **dadurch gekennzeichnet, dass** zwischen Käfig (19) und Einbauort (18) eine Arretierung (26; 28, 29) vorgesehen ist.

3. Wellenlagerung nach Anspruch 2, **dadurch gekennzeichnet, dass** die Arretierung aus einer Madenschraube (26) zur Blockierung einer Relativbewegung zwischen Einbauort und Käfig (19) besteht.

4. Wellenlagerung nach Anspruch 2, **dadurch gekennzeichnet, dass** die Arretierung aus Schnappnasen (28) mit zugehörigen Einrastungen (29) zur Blockierung einer Relativbewegung zwischen Einbauort (18) und Käfig (19) besteht.

5. Wellenlagerung nach einem der vorhergehenden Ansprüche, **dadurch gekennzeichnet, dass** die Hülse (21) und die Lagerkalotte (20) jeweils aus Sintermaterial gefertigt sind.

6. Wellenlagerung nach einem der vorherigen Ansprüche, **dadurch gekennzeichnet, dass** die Lagerkalotte (20) einen Einsatz aufweist, der fest mit dieser verbunden ist und mit dem die Hülse (21) in Verbindung steht.

7. Zentrifuge, **dadurch gekennzeichnet, dass** das zu lagernde Bauteil ein Zentrifugenrotor (10) ist, welcher zumindest einseitig in einer Wellenlagerung nach einem der vorherigen Ansprüche gelagert ist.

8. Zentrifuge nach Anspruch 7, **dadurch gekennzeichnet, dass** der Zentrifugenrotor (10) als zu lagerndes Bauteil einen hohlen Achsstummel (22), der mit der Wellenlagerung in Verbindung steht und gleichzeitig einen Zufluss (32) für das zu zentrifugierende Fluid darstellt, aufweist und der Käfig (19) der Wellenlagerung eine Zuführöffnung (31) für das zu zentrifugierende Fluid aufweist.

## Claims

1. Shaft bearing arrangement, which includes a ball socket (20), wherein
- an outer side (24) of the ball socket (20) is mounted in a receiving means (25) with two rotational degrees of freedom, wherein the receiving means (25) is part of a cage (19), which forms, with the ball socket (20), a pre-assembled unit, which is mountable at the site of installation (18) of the shaft bearing arrangement.
- a rotational body is mounted at least so as to be rotatable in an inner side (23) of the ball socket (20, **characterised in that**
- the rotational body is a sleeve (21), into which the component to be mounted can be inserted, wherein the sleeve (21) includes a retaining device (27), which limits the axial movement of the sleeve and prevents the sleeve from slipping out of the ball socket, wherein the connecting faces between the installation site (18), the cage (19), the ball socket (20) the sleeve (21) and the component (22) to be mounted are configured in such a manner that a seal is produced, wherein the retaining device (27) is situated on the cage (19) opposite a flange that is directed inwards.

2. Shaft bearing arrangement according to claim 1, **characterised in that** a locking means (26; 28, 29) is provided between the cage (19) and the installation site (18).

3. Shaft bearing arrangement according to claim 2, **characterised in that** the locking means comprises a grub screw (26) to block a relative movement between the installation site and the cage (19).

4. Shaft bearing arrangement according to claim 2, **characterised in that** the locking means comprises snap-type lugs (28) with associated engaging means (29) to block a relative movement between the installation site (18) and the cage (19).

5. Shaft bearing arrangement according to one of the preceding claims, **characterised in that** the sleeve (21) and the ball socket (20) are each produced from sintered material.

6. Shaft bearing arrangement according to one of the preceding claims, **characterised in that** the ball socket (20) includes an insert, the said insert being fixedly connected to the said ball socket and the sleeve (21) communicating with the said insert.

7. Centrifuge, **characterised in that that** component to be mounted is a centrifugal rotor (10), which is mounted at least at one end in a shaft bearing arrangement in accordance with one of the preceding claims.

8. Centrifuge according to claim 7, **characterised in that** the centrifugal rotor (10), as the component to be mounted, includes a hollow axle bearing journal (22), which communicates with the shaft bearing arrangement and at the same time provides an inflow (32) for the fluid to be centrifuged, and the cage (19) of the shaft bearing arrangement includes an inlet opening (31) for the fluid to be centrifuged.

## Revendications

1. Palier d'arbre, comprenant une calotte de palier (20), dans lequel
- une face extérieure (24) de la calotte de palier (20) est logée avec deux degrés de liberté de rotation dans un logement (25), le logement (25) faisant partie d'une cage (19) formant avec la calotte de palier (20) une unité prémontée qui peut être montée sur le lieu de montage (18) du palier d'arbre, et
- un corps rotatif est logé au moins en rotation dans une face intérieure (23) de la calotte de palier (20),
**caractérisé en ce que**
- le corps rotatif est une douille (21) dans laquelle on peut emboîter le composant à loger, la douille (21) présentant un dispositif de sécurité anti-perte (27) qui limite le jeu axial de la douille et empêche un glissement de la douille hors de la calotte de palier, les surfaces de liaison entre le lieu de montage (18), la cage (19), la calotte de palier (20), la douille (21) et le composant (22) à loger étant conçus pour assurer une étanchéité, le dispositif anti-perte (27) étant situé en face d'une bride de la cage (19) dirigée vers l'intérieur.

2. Palier d'arbre selon la revendication 1,
**caractérisé en ce qu'**
un dispositif de blocage (26, 28, 29) est prévu entre la cage (19) et le lieu de montage (18).

3. Palier d'arbre selon la revendication 2,
**caractérisé en ce que**
le dispositif de blocage est une vis sans tête (26) pour bloquer un mouvement relatif entre le lieu de montage et la cage (19).

4. Palier d'arbre selon la revendication 2,
**caractérisé en ce que**
le dispositif de blocage comprend des taquets à déclic (28) avec des encliquetages (29) associés pour bloquer un mouvement relatif entre le lieu de montage (18) et la cage (19).

5. Palier d'arbre selon l'une quelconque des revendications précédentes,
**caractérisé en ce que**
la douille (21) et la calotte de palier (20) sont chacune fabriquées à partir d'un matériau fritté.

6. Palier d'arbre selon l'une quelconque des revendications précédentes,
**caractérisé en ce que**
la calotte de palier (20) présente un insert solidaire de celle-ci et relié à la douille (21).

7. Centrifugeuse,
**caractérisée en ce que**
le composant à loger est un rotor de centrifugeuse (10) logé au moins d'un côté dans un palier d'arbre selon l'une quelconque des revendications précédentes.

8. Centrifugeuse selon la revendication 7,
**caractérisée en ce que**
la rotor de centrifugeuse (10) en tant que composant à loger présente un bout d'axe creux (22) en liaison avec le palier d'arbre et représentant en même temps une conduite d'alimentation (32) pour le fluide à centrifuger, et la cage (19) du palier d'arbre présente une ouverture d'admission (31) pour le fluide à centrifuger.
